# EUROPÄISCHE PATENTANMELDUNG

(11) **EP 0 940 596 A2**
(43) Veröffentlichungstag der Anmeldung: **08.09.1999**
(21) Anmeldenummer: 99890074.0
(22) Anmeldetag: 03.03.1999
(51) Int. Cl.: F16D 23/06

(54) **Reibkupplung**

(30) Priorität: 03.03.1998 AT 37098
(71) Anmelder: HOERBIGER Antriebstechnik GmbH, 86956 Schongau (DE)
(72) Erfinder: Rank, Robert, Dr.-Ing., 86946 Vilgertshofen-Stadl (DE)
(74) Vertreter: Laminger, Norbert, Mag.

(57) **Zusammenfassung**

Eine Reibkupplung, insbesondere Synchronisierungseinrichtung von Zahnradwechselgetrieben, bestehend aus mindestens zwei Kupplungskörpern (1, 2), die beim Einrücken der Kupplung in Reibkontakt kommen, wobei der eine Kupplungskörper aus einem ringförmigen Basiskörper (3) aus Metall mit wenigstens einer ebenen, konischen oder zylindrischen Trägerfläche, auf der ein Reibbelag aus einem organischen oder anorganischen Reibmaterial (4) befestigt ist, und wenigstens ein anderer Kupplungskörper aus einem Gegenkörper (8), vorzugsweise gleichfalls aus Metall, besteht und eine mit dem Reibbelag zusammenwirkende Gegenfläche aufweist, soll für geschlossene Systeme so weitergebildet werden, daß ein Klemmen oder Verkanten bei auch weiterhin ungehinderter Funktion vermieden werden kann und die Betätigung im Neuzustand erleichtert wird. Dazu ist zwischen dem Basiskörper und dem Gegenkörper auf wenigstens einem Teil der dem anderen Kupplungskörper zugewendeten Oberfläche. (4, 9, 11', 3') ein aus Paraffin oder Wachs bestehendes Verschleißmaterial (10, 14, 15) aufgebracht, das vor der ersten Inbetriebnahme der Reibkupplung den Basiskörper (3), insbesondere den Reibbelag, außer Kontakt mit dem Gegenkörper (8) hält und bei der ersten Inbetriebnahme beim Reibkontakt zwischen den Kupplungskörpern (1, 2) durch die auftretetenden Reibungskräfte und die entstehende Temperatur kurzfristig verschleißt.

## Beschreibung

Die Frfindung betrifft eine Reibkupplung, insbesondere Synchronisierungseinrichtung von Zahnradwechselgetrieben, mit mindestens zwei Kupplungskörpern, die beim Einrücken der Kupplung in Reibkontakt kommen, wobei der eine Kupplungskörper aus einem ringförmigen Basiskörper aus Metall mit wenigstens einer ebenen, konischen oder zylindrischen Trägerfläche, auf der ein Reibbelag aus einem organischen oder anorganischen Reibmaterial befestigt ist, und wenigstens ein anderer Kupplungskörper aus einem Gegenkörper, vorzugsweise gleichfalls aus Metall, besteht und eine mit dem Reibbelag zusammenwirkende Gegenfläche aufweist.

Reibkupplungen sowie auch Synchronisierungseinrichtungen dieser Art sind bereits mehrfach in unterschiedlichen Ausführungen bekannt. Sie haben die Aufgabe, zwischen mit unterschiedlicher Drehzahl rotierenden Bauteilen einen Reibkontakt herzustellen und so deren Drehzahlen aneinander anzugleichen. Vorrangig werden solche Reibkupplungen zur Synchronisierung von Zahnradwechselgetrieben, meist von Kraftfahrzeugen, verwendet, um das Schalten derselben und den Gangwechsel zu erleichtern. Insbesondere konische Reibsysteme weisen vor Inbetriebnahme, bei der Montage und im Neuzustand der in Reibkontakt gebrachten Oberflächen hohe Reibungszahlen im Reibkontakt auf, die durch den Fertigungszustand der Oberflächen der Reibpaarung begründet sind und die ersten Schaltungen der Kupplung nachteilig erschweren. Wenn die miteinander in Reibkontakt kommenden Kupplungskörper während des Transportes vor der Montage oder bei dieser selbst mit größerer Kraft aufeinandergepreßt werden oder aufeinanderschlagen, kann es sogar zu einem Klemmen oder Verkanten kommen, wodurch die ersten Schaltbewegungen ernstlich behindert oder sogar unmöglich werden. Diese Nachteile werden erst nach einigen Schaltvorgängen der neuen Kupplung oder des neuen Synchrongetriebes gemildert oder beseitigt, sobald sich die in Reibkontakt kommenden Flächen der Reibpaarung etwas abgeschliffen und aneinander angepaßt haben.

Eine Reib-Paarung mit einer dünnen, schnell verschleißenden Einfahr-Schicht auf einem der Reibkörper ist in der DE-OS 2 264 275 beschrieben. Diese Einfahr-Schicht soll aber in exothermer Reaktion schmirgelnd wirkende Umwandlungsprodukte bilden, wobei auch Bindemittel verwendet werden, die leicht verbrennen oder verkracken und dabei kohlenstoffreiche Restverbindungen hinterlassen. Damit soll die Gegenreibfläche schnell von allen Verunreinigungen befreit und die angestrebte Oberflächengüte rasch erreicht werden. Wie aber in weiterer Folge erwähnt wird, fallen die beim Einfahr-Vorgang gebildeten Stoffe als stärkerer Abrieb heraus, so daß diese Lösung nur für offene Systeme, beispielsweise Bremsen, sinnvoll anwendbar ist. Bei geschlossenen Systemen, wie etwa geschmierten Reibungskupplungen oder im Ölbad laufenden Synchronisierungseinrichtungen, wirkt sich dieser das Schmiemittel bzw. Öl verunreinigende Abrieb störend und funktionsbehindernd aus, z.B. durch Eindringen in die Lager.

Der Erfindung liegt daher die Aufgabe zugrunde, die bekannten Reibungskupplungen und Synchronisierungseinrichtungen mit geschlossenen Systemen so weiterzubilden, daß die angeführten Nachteile der bekannten Ausführungsformen bei weiterhin ungehinderter Funktion vermieden werden und die Betätigung im Neuzustand erleichtert wird. Insbesondere soll bei einer Synchronisierungseinrichtung die sogenannte Grünschaltbarkeit des Wechselgetriebes verbessert werden.

Durch die Erfindung wird diese Aufgabe dadurch gelöst, daß zwischen dem Basiskörper und dem Gegenkörper auf wenigstens einem Teil der dem anderen Kupplungskörper zugewendeten Oberfläche ein aus Paraffin oder Wachs bestehendes Verschleißmaterial aufgebracht ist, das vor der ersten Inbetriebnahme der Reibkupplung den Basiskörper, insbesondere den Reibbelag, außer Kontakt mit dem Gegenkörper hält und bei der ersten Inbetriebnahme beim Reibkontakt zwischen den Kupplungskörpern durch die auftretenden Reibungskräfte und die entstehende Temperatur kurzfristig verschleißt. Das erfindungsgemäß zur Anwendung kommende Verschleißmaterial bildet keinen partikelförmigen Abrieb, der die Funktion der Lager oder überhaupt der Kupplung oder Synchronisierungseinrichtung behindern könnte und kann nach seiner Entfernung von dem oder den Kupplungskörpern vollständig im Öl bzw. Schmiermittel gelöst werden, so daß keinerlei störende Einflüsse zu befürchten sind.

Wachs weist z.B. eine gute Haftfähigkeit auch auf glatten Oberflächen wie Stahl auf und ist penetrationsfähig, was insbesondere für eine formschlüssige Aufbringung auf Sintermaterialien von Vorteil ist. Ähnliches gilt auch für Paraffin. Wachs und Paraffin sind außerdem benetzungsfähig und weisen eine geringe Wärmeleitfähigkeit auf. Beide Materialien bewirken eine zeitlich begrenzte Herabsetzung der Reibungszahl im Reibkontakt, so daß auf einfache Weise die reibungszahlsenkende Wirkung der aufgebrachten Verschleißmaterialien mit der Absenkung der Reibungszahl in den Reibkontakten auf das gewünschte Betriebsniveau abgestimmt werden kann.

Die Kupplungskörper, die beim Einschalten der Kupplung in Reibkontakt miteinander kommen, werden durch das zwischen ihnen angeordnete Verschleißmaterial schon beim Transport und bei der Montage der Kupplung im Abstand voneinander gehalten, so daß sie sich nicht verklemmen oder verkanten können, auch wenn sie gegeneinandergepreßt werden oder aufeinanderschlagen. Auch bei der ersten Inbetriebnahme der Reibkupplung werden die Reibflächen der Kupplungskörper zunächst kurzfristig außer Reibkontakt gehalten, zu welchem Zweck das Verschleißmaterial vorzugsweise eine Höhe oder Dicke aufweist, die ausreichend ist, um die Kupplungskörper über deren gesamten Umfang sicher beabstandet zu halten. Sie kommen erst beim allmählichen Verschleißen des Verschleißmaterials langsam in Reibkontakt, wobei sich die größten, von der Fertigung herrührenden Unebenheiten der Reibflächen abschleifen. Die sogenannte Grünschaltbarkeit einer neuen Reibkupplung bzw. eines neuen Synchrongetriebes wird dadurch entscheidend erleichtert. Nach einigen Schaltvorgängen ist das Verschleißmaterial zur Gänze beseitigt und sind die Reibflächen so weit abgeschliffen, daß eine einwandfreie Betätigung und ein normaler Betrieb der Reibkupplung sichergestellt ist.

In weiterer Ausgestaltung der Erfindung ist der Schmelzpunkt des Verschleißmaterials niedriger als der Schmelzpunkt des in Reibkontakt kommenden Materials der Kupplungskörper, insbesondere des Reibmaterials, und die Phasenänderung des Verschleißmaterials von fest nach flüssig liegt im Bereich der Temperatur, die bei der Beanspruchung der verwendeten Reibpaarung auftritt, wobei das Verschleißmaterial durch die auftretende Reibungstemperatur wegschmilzt.

Erfindungsgemäß kann aber auch die Schubfestigkeit des Verschleißmaterials kleiner sein als die Schubfestigkeit des in Reibkontakt kommenden Materials der Kupplungskörper, insbesondere des verwendeten Reibmaterials, wobei das Verschleißmaterial bei der Beanspruchung der verwendeten Reibpaarung durch die auftretenden Reibungskräfte abgeschert wird. In beiden Fällen ist eine verhältnismäßig rasche Beseitigung des Verschleißmaterials gewährleistet, so daß die Reibflächen der Kupplungskörper voll miteinander in Eingriff kommen.

Zweckmäßig weist das Verschleißmaterial eine geringe Wärmeleitfähigkeit auf. Diese Verschleißmaterialien können auf alle Reibmaterialien und auch auf die übrigen Flächen der Kupplungskörper, insbesondere auf die mit dem Reibbelag zusammenwirkende Gegenfläche, vorteilhaft aufgebracht werden.

Der auf die Trägerfläche des Basiskörpers aufgebrachte Reibbelag kann aus Streusintermaterial bestehen. Die vorteilhaften Reibeigenschaften dieses Materials sind bekannt; außerdem weist das Streusintermaterial aufgrund seiner Porosität eine besondere Eignung zur Aufbringung eines Verschleißmaterials, insbesondere von Paraffin oder Wachs auf. Es ist aber auch möglich, einen Reibbelag zu verwenden, der ganz oder teilweise aus organischem Material, allenfalls mit einem Harz-Bindemittel besteht. Ebenso ist ein Reibbelag aus aufgespritztem Metall wie Messing oder Molybdän für die Aufbringung eines Verschleißmaterials geeignet, wobei in allen Fällen praktisch die gleichen, eingangs angeführten Vorteile erzielt werden.

Das Verschleißmaterial selbst kann auf verschiedene Weise und in verschiedener Anordnung zwischen die Kupplungskörper eingebracht werden. Eine Möglichkeit besteht erfindungsgemäß darin, das Verschleißmaterial in punkt- oder streifenförmiger Anordnung über die Oberfläche eines oder mehrerer Kupplungskörper, insbesondere des Reibbelags, zu verteilen. Bei mit Nutung versehenem Reibbelag kann nach einem weiteren Merkmal der Erfindung wenigstens ein Teil des Verschleißmaterials punkt- oder streifenförmig in Nuten des Reibbelags angeordnet sein. Weiterhin ist vorgesehen, daß streifenförmiges Verschleißmaterial gegen die Mittelachse des oder der Kupplungskörper geneigt auf deren Oberfläche angeordnet ist. Nach einer weiteren Variante der Erfindung kann das Verschleißmaterial schließlich über die Oberfläche des oder der Kupplungskörper ungleichmaßig verteilt angeordnet sein, wahlweise in beliebiger Körperform und beliebiger Flächenausdehnung. Die einzelnen Arten der Anordnung können auch miteinander kombiniert werden.

Im Rahmen der Erfindung ist es somit möglich, das Verschleißmaterial den jeweiligen Anforderungen entsprechend und in Abhängigkeit von den Materialeigenschaften der Kupplungskörper sowie des Reibbelages zu wählen, wobei auch die Zeitspanne bestimmt werden kann, bis zu der das Verschleißmaterial völlig verschlissen ist.

Einen Einfluß auf die Verschleißzeit hat auch die Flächenausdehnung des verwendeten Verschleißmaterials im Vergleich zur gesamten Reibfläche des Reibbelages. Gemäß der Erfindung beträgt die Gesamtfläche des Verschleißmaterials nur einen Bruchteil der gesamten Reibfläche des Reibbelages. Dies hat sich als ausreichend erwiesen, um die miteinander in Reibkontakt kommenden Flächen der Kupplungskörper lange genug im Abstand voneinander zu halten, bis eine leichte Betätigung der Kupplung erreicht ist. Überdies wird damit eine unerwünschte Veränderung der Eigenschaften des Schmiermittels im geschlossenen System weitgehend vermieden.

Nach einer weiteren Ausführungsfcrm der Erfindung können die Kupplungskörper schließlich als ebene Scheiben ausgebildet sein, von denen wenigstens eine auf einer Seite mit einem Reibbelag versehen ist, wobei das Verschleißmaterial zwischen den Scheiben angeordnet ist. Diese Ausführung ist insbesondere z.B. für die Schaltbremsen in automatischen Getrieben von Kraftfahrzeugen geeignet

Die Erfindung umfaßt auch Ausführungen, bei denen das Verschleißmaterial auf Flächen der Kupplungskörper angeordnet ist, die beim Einrücken der Kupplung nicht unmittelbar in Reibkontakt mit dem anderen Kupplungskörper kommen. Dieses muß nur so angebracht sein, daß es die in Reibkontakt kommenden Flächen der Kupplungsteile vor dem Einrücken der Kupplung im Abstand voneinander hält. Die Beseitigung des Verschleißmaterials erfolgt dann durch teilweises Abscheren beim Einrücken der Kupplung, bis die Reibflächen ineinandergreifen. Ein allenfalls verbleibender Rest, der die Funktion der Kupplung nicht beeinträchtigt, wird dann beim Erwärmen der Kupplung im Betrieb weggeschmolzen. Bei Synchronisierungseinrichtungen von Schaltgetrieben, die in aller Regel im Ölbad des Getriebes laufen, wird das Verschleißmaterial vom Getriebeöl aufgenommen. Es muß daher so beschaffen sein, daß es die Eigenschaften des Öls nicht nachteilig beeinflußt.

Weitere Einzelheiten und Vorteile der Erfindung ergeben sich aus der nachfolgenden Beschreibung von Ausführungsbeispielen, die in den Zeichnungen dargestellt sind. In diesen zeigen: Die Fig. 1 bis 4 je ein Ausführungsbeispiel der Erfindung an Hand einer Synchronisierungseinrichtung, von der jeweils ein axialer Mittelschnitt durch die obere Hälfte der Kupplungskörper dargestellt ist, die Fig. 5 bis 7 Reibringe als Kupplungskörper in perspektivischer Draufsicht und die Fig. 8 bis 11 Querschnitte durch die Reibringe mit unterschiedlicher Anordnung von Verschleißmaterial.

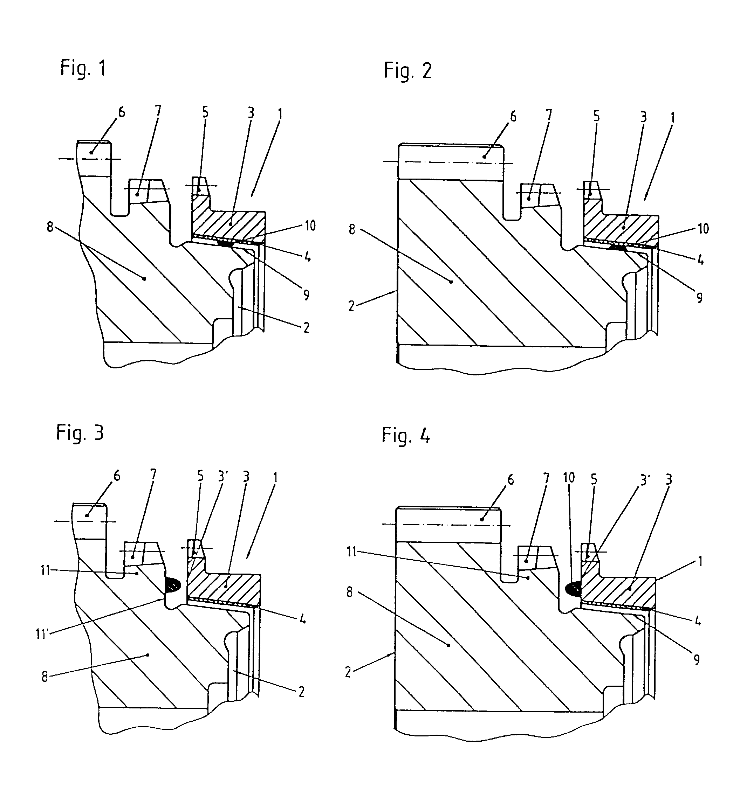

Die in den Fig. 1 bis 4 auszugsweise dargestellten Reibkupplungen von Synchronisiereinrichtungen bestehen jeweils aus zwei Kupplungskörpern 1 und 2, von denen der Kupplungskörper 1 als Reibring mit einem Basiskörper 3 ausgeführt ist. Dieser weist einen Reibbelag 4 und eine Verzahnung 5 auf, die zum Eingriff einer nicht dargestellten Schiebemuffe zum Schalten der Gänge des Wechselgetriebes dient. Der Kupplungskörper 2 ist von einem Gangrad mit einem Zahnkranz 6 und einer Verzahnung 7 für die Schaltmuffe gebildet und dient als Gegenkörper 8 für den Basiskörper 3 mit einer Gegenfläche 9, die mit dem Reibbelag 4 des Basiskörpers 3 zusammenarbeitet.

Zwischen dem Basiskörper 3 und dem Gegenkörper 8 jedes der vier Ausführungsbeispiele ist auf einer jeweils dem anderen Kupplungskörper zugewendeten Fläche Verschleißmaterial 10 angeordnet. Dieses befindet sich gemäß Fig. 1 auf dem Reibbelag 4 des Basiskörpers 3. Bei der Ausführung nach Fig. 2 ist das Verschleißmaterial 10 dagegen auf der Gegenfläche 9 des Gegenkörpers 8 angeordnet. Auch im Ausführungsbeispiel nach Fig. 3 ist das Verschleißmaterial 10 auf dem Gegenkörper 8 befestigt, u.zw. auf einer Seitenfläche 11' eines radial nach außen ragenden Fortsatzes 11, der die Verzahnung 7 trägt. Das Verschleißmaterial 10 liegt dort der Stirnfläche 3' des Basiskörpers 3 gegenüber und kommt beim Verschieben des Basiskörpers 3 zum Einlegen eines Ganges mit dieser Fläche 3' in Berührung. Fig. 4 zeigt schließlich eine Ausführung, bei der das Verschleißmaterial 10 auf der genannten Stirnfläche 3' des Basiskörpers 3 dem Fortsatz 11 des Gegenkörpers 8 gegenüberliegend angeordnet ist.

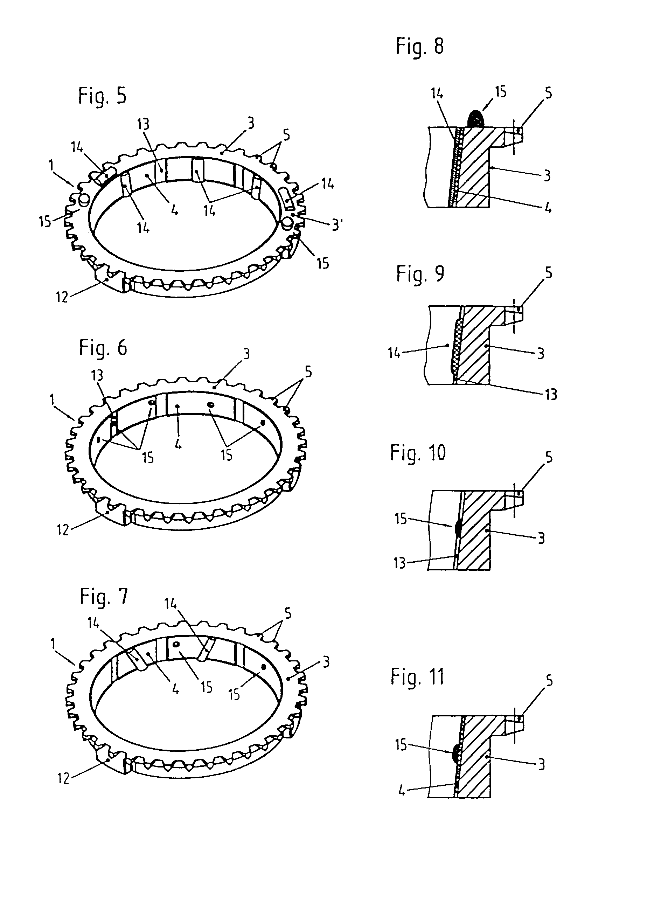

Die Fig. 5 bis 7 und die zugehörigen Schnittdarstellungen der Fig. 8 bis 11 zeigen verschiedene Anordnungen und Formgestaltungen von auf dem Kupplungskörper 1 angeordnetem Verschleißmaterial. Der Kupplungskörper 1 ist in diesen Ausführungsbeispielen als Reibring mit einem Basiskörper 3 ausgebildet, der an seinem Innenumfang eine konische Trägerfläche mit einem Reibbelag 4 aufweist und an seinem Außenumfang mit einer Verzahnung 5 versehen ist. Außerdem sind an seinem Außenumfang Mitnahmenocken 12 vorgesehen. Der Reibbelag 4 weist radial verlaufende Nuten 13 auf.

Im Ausführungsbeispiel nach Fig. 5 sind walzenförmige Verschleißkörper 14 mit halbzylindrischem Querschnitt über den Reibbelag 4 verteilt und außerdem auch auf der Stirnfläche 3' des Basiskörpers 3 angeordnet. Auf der Stirnfläche 3' befinden sich auch halbkugelförmige oder kegelige Verschleißkörper 15, die wie die Verschleißkörper 14 auch aus Fig. 8 zu erkennen sind. Gemäß Fig. 9 ist ein walzenförmiger Verschleißkörper 14 in einer Nut 13 des auf den Basiskörper 3 aufgebrachten Reibbelags 4 angeordnet. Aus Fig. 6 ist ersichtlich, daß auf dem Reibbelag 4 des Basiskörpers 3 halbkugelförmige Reibkörper 15 verteilt sind, von denen einer auch in einer Nut 13 angeordnet ist, wie auch aus Fig. 10 ersichtlich ist. Die Fig. 7 und 11 zeigen schließlich ein Ausführungsbeispiel, in dem das Verschleißmaterial auf den Reibbelag 4 des Basiskörpers 3 aufgebracht ist. Aus Fig. 7 sind walzenförmige Verschleißkörper 14 zu erkennen, die gegen die Mittelachse des den Kupplungskörper bildenden Basiskörpers 3 geneigt sind, sowie halbkugelförmige Verschleißkörper 15, die auf dem Reibbelag 4 aufsitzen, wie insbesondere in Fig. 11 gezeigt ist.

In allen Ausführungsbeispielen ist das Verschleißmaterial 10 bzw. sind die Verschleißkörper 14 und 15 über die jeweilige Fläche des Basiskörpers 3 unregelmäßig verteilt angeordnet. Es sind aber auch Ausführungen mit regelmäßig verteilten Verschleißkörpern gleicher oder unterschiedlicher Formgebung möglich. In allen Ausführungsbeispielen dient das Verschleißmaterial dazu, die miteinander in Reibschluß zusammenwirkenden Flächen der Kupplungskörper 1 und 2 vor Inbetriebnahme der Kupplung, also beim Transport, während der Montage und vor dem Einrücken der Kupplung, in Abstand voneinander zu halten, so daß sie sich nicht miteinander verklemmen oder festfressen können. Das Verschleißmaterial stellt daher eine leichte und einwandfreie Betätigung der Reibkupplung auch in neuem Zustand sicher und verbessert dadurch die Grünschaltbarkeit derselben.

## Patentansprüche

1. Reibkupplung, insbesondere Synchronisierungseinrichtung von Zahnradwechselgetrieben, mit mindestens zwei Kupplungskörpern (1, 2), die beim Einrücken der Kupplung in Reibkontakt kommen, wobei der eine Kupplungskörper aus einem ringförmigen Basiskörper (3) aus Metall mit wenigstens einer ebenen, konischen oder zylindrischen Trägerfläche, auf der ein Reibbelag aus einem organischen oder anorganischen Reibmaterial (4) befestigt ist, und wenigstens ein anderer Kupplungskörper aus einem Gegenkörper (8), vorzugsweise gleichfalls aus Metall, besteht und eine mit dem Reibbelag zusammenwirkende Gegenfläche aufweist, **dadurch gekennzeichnet**, daß zwischen dem Basiskörper und dem Gegenkörper auf wenigstens einem Teil der dem anderen Kupplungskörper zugewendeten Oberfläche (4, 9, 11', 3') ein aus Paraffin oder Wachs bestehendes Verschleißmaterial (10, 14, 15) aufgebracht ist, das vor der ersten Inbetriebnahme der Reibkupplung den Basiskörper (3), insbesondere den Reibbelag, außer Kontakt mit dem Gegenkörper (8) hält und bei der ersten Inbetriebnahme beim Reibkontakt zwischen den Kupplungskörpern (1, 2) durch die auftretenden Reibungskräfte und die entstehende Temperatur kurzfristig verschleißt.

2. Reibkupplung nach Anspruch 1, dadurch gekennzeichnet, daß der Schmelzpunkt des Verschleißmaterials (10, 14, 15) niedriger ist als der Schmelzpunkt des in Reibkontakt kommenden Materials der Kupplungskörper (1, 2), insbesondere des Reibmaterials (4), und daß die Phasenänderung des Verschleißmaterials (10) von fest nach flüssig im Bereich der Temperatur liegt, die bei der Beanspruchung der verwendeten Reib-paarung auftritt, wobei das Verschleißmaterial (10, 14, 15) durch die auftretende Reibungswärme wegschmilzt.

3. Reibkupplung nach Anspruch 1 oder 2, dadurch gekennzeichnet, daß die Schubfestigkeit des Verschleißmaterials (10, 14, 15) kleiner ist als die Schubfestigkeit des in Reibkontakt kommenden Materials der Kupplungskörper (1, 2), insbesondere des verwendeten Reibmaterials (4), wobei das Verschleißmaterial (10, 14, 15) bei der Beanspruchung der verwendeten Reibpaarungen durch die auftretenden Reibungskräfte abgeschert wird.

4. Reibkupplung nach einem der Ansprüche 1 bis 3, dadurch gekennzeichnet, daß das Verschleißmaterial (10, 14, 15) eine geringe Wärmeleitfähigkeit aufweist.

5. Reibkupplung nach einem der Ansprüche 1 bis 4, dadurch gekennzeichnet, daß der Reibbelag (4) aus Streusintermaterial besteht.

6. Reibkupplung nach einem der Ansprüche 1 bis 4, dadurch gekennzeichnet, daß der Reibbelag (4) ganz oder teilweise aus organischem Material, allenfalls mit einem Harz-Bindemittel, besteht.

7. Reibkupplung nach einem der Ansprüche 1 bis 4, dadurch gekennzeichnet, daß der Reibbelag (4) aus aufgespritztem Metall wie Messing oder Molybdän besteht.

8. Reibkupplung nach einem der vorhergehenden Ansprüche, dadurch gekennzeichnet, daß das Verschleißmaterial (10, 14, 15) in punkt- oder streifenförmiger Anordnung über die Oberfläche (4, 9, 3', 11') eines oder mehrerer Kupplungskörper (1, 2), insbesondere des Reibbelags (4), verteilt ist.

9. Reibkupplung nach einem der vorhergehenden Ansprüche, dadurch gekennzeichnet, daß bei mit Nutung (13) versehenem Reibbelag (4) wenigstens ein Teil des Verschleißmaterials (10, 14, 15) punkt- oder streifenförmig in den Nuten (13) angeordnet ist.

10. Reibkupplung nach einem der vorhergehenden Ansprüche, dadurch gekennzeichnet, daß streifenförmiges Verschleißmaterial (14) gegen die Mittelachse des oder der Kupplungskörper (1, 2) geneigt auf deren Oberfläche angeordnet ist.

11. Reibkupplung nach einem der vorhergehenden Ansprüche, dadurch gekennzeichnet, daß das Verschleißmaterial (10, 14, 15) über die Oberfläche des oder der Kupplungskörper (1, 2) ungleichmäßig verteilt angeordnet ist, wahlweise in beliebiger Körperform und beliebiger Flächenausdehnung.

12. Reibkupplung nach einem der vorhergehenden Ansprüche, dadurch gekennzeichnet, daß die Gesamtfläche des Verschleißmaterials (10, 14, 15) nur einen Bruchteil der gesamten Fläche des Reibbelages (4) beträgt.

13. Reibkupplung nach einem der vorhergehenden Ansprüche, dadurch gekennzeichnet, daß die Kupplungskörper (1, 2) als ebene Scheiben ausgebildet sind, von denen wenigstens eine auf einer Seite mit einem Reibbelag (4) versehen ist, wobei das Verschleißmaterial (10, 14, 15) zwischen den Scheiben angeordnet ist.
